Europäisches Patentamt

European Patent Office

Office européen des brevets

(11) Veröffentlichungsnummer: **0 188 649**
A1

# EUROPÄISCHE PATENTANMELDUNG

(21) Anmeldenummer: 85100763.3

(22) Anmeldetag: 25.01.85

(51) Int. Cl.⁴: **F 16 L 3/12**

(43) Veröffentlichungstag der Anmeldung: 30.07.86
Patentblatt 86/31

(71) Anmelder: **Berner, Albert, Weckrain 7, D-7118 Künzelsau (DE)**

(72) Erfinder: **Fischer, Kuno, Bussardweg 6, D-7118 Künzelsau-Amrichshausen (DE)**

(74) Vertreter: **Bunke, Holger, Dr.rer.nat. Dipl.-Chem. et al, Patentanwälte Prinz, Leiser, Bunke & Partner Ernsbergerstrasse 19, D-8000 München 60 (DE)**

(84) Benannte Vertragsstaaten: **AT BE CH DE FR IT LI LU NL SE**

(54) Rohrschelle.

(57) Zur Vereinfachung und Verbilligung der Herstellung und Zur Verbesserung der Handhabbarkeit wird eine Rohrschelle aus einem etwa kreisförmig gebogenen, einteiligen Schellenband (1) mit zwei nach außen abgebogenen Endflanschen (2) (3), die mittels einer schwenkbar gelagerten Spannschraube (4) zusammenzuziehen sind, vorgeschlagen, bei der der eine, als Widerlager für den Kopf (4') der Spannschraube (4) dienende Flansch (2) offengeschlitzt ist und die Spannschraube (4) den anderen Flansch (3) mit Spiel durchsetzt und in die Gewindebohrung (7) einer ebenen, schwenkbar mit dem Schellenband (1) verbundenen Platte (5) eingreift.

Herr
Albert Berner
Weckrain 7

7118 Künzelsau

---

Rohrschelle

---

Die Erfindung betrifft eine Rohrschelle aus einem etwa kreisförmig gebogenen, einteiligen Schellenband mit zwei nach außen abgebogenen Endflanschen, die mittels einer schwenkbar gelagerten Spannschraube zusammenzuziehen sind, wobei der eine, als Widerlager für den Kopf der Spannschraube dienende Flansch offen geschlitzt ist.

Eine solche Rohrschelle ist beispielsweise aus dem DE-GM 1 945 024 bekannt. Rohrschellen dieser Art werden zur Installation von Rohren bzw. Rohrleitungen im Sanitärbereich, im Heizungsbau und im Anlagenbau verwendet, wobei zunächst die Rohrschellen auf in eine Wand oder in die Decke eingelassene Anker oder Gewindebolzen aufgeschraubt werden, dann die Spannschrauben der Rohrschellen so weit gelöst werden, daß sie aus dem Widerlager des Schraubenkopfs seitlich herausgeschwenkt werden können,

Bj/Gl

wonach das geöffnete Schellenband so weit aufgebogen wird, daß sich das zu befestigende Rohr zwischen den Flanschen hindurchschieben läßt. Dann wird das Schellenband wieder zusammengedrückt, die Spannschraube in den als Widerlager für den Schraubenkopf dienenden Endflansch zurückgeschwenkt, worauf schließlich die Flansche durch Anziehen der Spannschraube zusammengezogen werden, bis die gewünschte Spannung erreicht ist.

Bei der bekannten Rohrschelle wird die Schwenkbarkeit der Spannschraube dadurch erreicht, daß einer der beiden Endflansche schlaufen- oder ösenartig abgebogen ist, in den so gebildeten etwa zylindrischen Hohlraum eine walzenförmige Mutter eingeschoben ist, in deren Gewindebohrung die Spannschraube, die einen entsprechend angeordneten Schlitz in dem ösenartig abgebogenen Endflansch durchdringt, eingeschraubt ist. Spannschraube und walzenförmige Mutter bilden so eine T-förmige Einheit, die sich scharnierartig verschwenken läßt, wobei der Schwenkbereich allerdings nur solange ausreichend groß ist, wie der aus der Mutter herausragende Schraubenteil nicht am Schellenband anschlägt.

Diese bekannte Rohrschelle ist in der Herstellung verhältnismäßig teuer, einmal wegen des erforderlichen schlaufenartigen Abbiegens des einen Endflansches, zum anderen wegen der unterschiedlichen Verformung der beiden Endflansche und zum dritten wegen der walzenförmigen Mutter. Bei einem ausgesprochenen Massenartikel, wie es eine Rohrschelle darstellt, spielen auch nur geringe Einsparungen bei der Fertigung aber bekanntlich eine sehr große Rolle. Aber auch die Handhabbarkeit der bekannten Rohrschelle weist Nachteile auf, weil die Spannschraube fast ganz aus der walzenförmigen Mutter herausgeschraubt werden muß, um die Rohrschelle öffnen und das zu befestigende Rohr einschieben zu können.

Aus der DE-OS 30 29 861 ist eine weitere Rohrschelle der
eingangs genannten Gattung bekannt, bei der der nicht als
Widerlager für den Kopf der Spannschraube dienende Endflansch nur angedeutet, d.h. wesentlich kürzer ist als
der offen geschlitzte zweite Flansch. Dafür ist in den
kürzeren Endflansch ein U-förmiger Verbindungskörper mit
Spiel eingesetzt, wobei mindestens einer der Schenkel dieses Verbindungskörpers eine Gewindebohrung besitzt, in
die die Spannschraube eingreift. Die seitliche Verschwenkbarkeit der aus Spannschraube und U-förmigem Verbindungskörper bestehenden Anordnung ist durch das Spiel gegeben,
mit dem der Verbindungskörper einen entsprechenden Schlitz
im kürzeren Flansch durchsetzt.

Auch diese bekannte Rohrschelle hat den Nachteil, daß sie
relativ aufwendige Herstellungsschritte erfordert. Auch
hier sind die beiden Endflansche unterschiedlich geformt,
und der zusätzliche U-förmige Verbindungskörper ist nicht
nur seinerseits aufwendig in der Herstellung, sondern erfordert auch einen aufwendigen Montageschritt: er muß
nämlich zunächst einmal in den Schlitz des kürzeren Flansches eingefädelt werden, was wiederum die leichte Handhabbarkeit der Rohrschelle beeinträchtigt. Und schließlich
ist auch hier die Verschwenkbarkeit der Spannschraube nur
solange in ausreichendem Maße gewährleistet, wie die Spannschraube nur sowenig in den Verbindungskörper eingeschraubt
ist, daß der hinter dem Verbindungskörper austretende
Schraubenteil nicht am Schellenband anschlägt.

Der Erfindung liegt die Aufgabe zugrunde, eine Rohrschelle
zu schaffen, die die geschilderten Nachteile nicht aufweist, die insbesondere eine vereinfachte und dadurch billigere Herstellung erlaubt und deren Handhabbarkeit bei
der Installation von Rohren verbessert ist.

0188649

Diese Aufgabe wird bei einer Rohrschelle der eingangs genannten Gattung erfindungsgemäß dadurch gelöst, daß die Spannschraube den anderen, nicht als Widerlager für den Schraubenkopf dienenden Flansch mit Spiel durchsetzt und in die Gewindebohrung einer ebenen, schwenkbar mit dem Schellenband verbundenen Platte eingreift.

Dadurch wird erreicht, daß die beiden Flansche eine praktisch gleiche äußere Form aufweisen können, daß also beide Enden des Schellenbandes in gleicher Weise mit derselben Maschine und sogar in einem Arbeitsgang geformt werden können, was die Herstellung der Rohrschelle vereinfacht und verbilligt. Außerdem wird zur Herstellung der verbindungsgemäßen Rohrschelle kein aufwendig geformter und dadurch teurer Verbindungskörper und keine walzenförmige Mutter benötigt. Vielmehr wird erfindungsgemäß als "Verbindungskörper" eine einfache ebene Platte, z.B. ein Blech oder ein Stück Bandstahl verwendet, was sowohl die Herstellung als auch die Handhabung erleichtert. Die Platte entspricht in ihrer Dimensionierung vorzugsweise genau den Abmessungen der beiden Flansche, so daß zur Herstellung der Platte dasselbe Halbzeug verwendet werden kann, das auch zur Herstellung des Schellenbandes benutzt wird.

Bei einer vorteilhaften Ausführungsform der erfindungsgemäßen Rohrschelle weist der Flansch, der nicht als Widerlager für den Kopf der Spannschraube dient, einen nach außen geschlossenen Längsschlitz auf, der sich über die Biegestelle zwischen Schellenband und Flansch hinaus erstreckt und in Form einer Nut im Schellenband endet, wobei die Platte einen hakenförmigen Ansatz aufweist, der den Längsschlitz und/oder die Nut lösbar und schwenkbar hintergreift. Der Ansatz ist vorteilhaft T-förmig und vorzugsweise um etwa 60 bis 90° gegenüber der Ebene der Platte gebogen. Die Schwenkbarkeit der aus Spannschraube und Platte bestehenden Einheit wird dadurch ebenso erleichtert wie die Montage der Platte in der Rohrschelle. Beides wiederum erleichtert die Handhabung der Schelle bei der Montage eines Rohres.

Bei einer anderen bevorzugten Ausführungsform der Erfindung weist die Platte einen Querschlitz auf, dessen Breite der Breite des Flansches, der nicht als Widerlager für den Kopf der Spannschraube dient, angepaßt ist, wobei dieser Flansch den Querschlitz der Platte mit Spiel durchsetzt. Diese Ausführungsform ist die einfachste und billigste, erfordert den geringsten Herstellungsaufwand und ist daher bevorzugt.

Vorzugsweise entspricht die Breite der Platte derjenigen des Schellenbandes, während die Breite des Flansches der Länge des Querschlitzes entspricht. "Entsprechen" bedeutet in diesem Falle, daß bei der Dimensionierung jeweils ein genügend großes Spiel berücksichtigt wird, damit die Platte nicht nur ohne Schwierigkeiten am Schellenband montiert werden kann, sondern auch nach außen leicht verschwenkbar bleibt.

Bei einer weiteren Ausführungsform der erfindungsgemäßen Rohrschelle weist das Schellenband in an sich bekannter Weise eine Soll-Biegestelle auf, und zwar vorzugsweise an einer den Flanschen gegenüberliegenden Stelle des Schellenbandes.

Bei einer weiteren Ausführungsform ist das Schellenband innen mit einer vorzugsweise profilierten schalldämmenden Einlage aus gummielastischem Material ausgekleidet. Diese Ausführungsform hat, abgesehen von der Schalldämmung der zu befestigenden Rohrleitung, einen besonderen Vorteil:

Die gummielastische Einlage drückt nämlich von innen auf den hakenförmigen Ansatz, der den Längsschlitz im zugehörigen Flansch und/oder die Nut im Schellenband lösbar und schwenkbar hintergreift, mit der Folge, daß die Platte stets in eine Ebene zurückfedert, die in etwa parallel zur Ebene des Flansches verläuft, durch dessen Längsschlitz der hakenförmige Ansatz bei der Montage der Platte hindurchgesteckt worden ist. Wenn also die aus Spannschraube und Platte bestehende Einheit nach außen verschwenkt wird, um die Schelle aufzubiegen und das zu befestigende Rohr zwischen den Flanschen hindurchzuschieben, dann erfolgt das Verschwenken der Einheit bei dieser Ausführungsform gegen die Federkraft der Dämmeinlage aus gummielastischem Material, welche diese Einheit stets "automatisch" in die Schließstellung zurückführt, in der die Spannschraube zum Verbinden der beiden Flansche angezogen werden kann.

Bei einer weiteren Ausführungsform der Rohrschelle befinden sich außen auf dem Schellenband Befestigungsmittel herkömmlicher Art, beispielsweise eine aufgeschweißte Mutter, womit die Rohrschelle an einer Wand oder in der Decke bzw. an korrespondierenden Befestigungsmitteln, etwa einem Schraubbolzen, befestigt werden kann.

Das Schellenband, die daraus abgebogenen Flansche und die Platte mit der Gewindebohrung für die Spannschraube können aus jedem dafür geeigneten Material bestehen, vorzugsweise aus Stahlblech mit einer Stärke von etwa 1 bis 3 mm, aber auch aus Buntmetallen wie Messing oder Kupfer, aus Zinkblech oder aus irgendeinem sonstigen metallischen Werkstoff. Als Werkstoff für die Rohrschelle kann aber auch ein entsprechend zäher Kunststoff, beispielsweise Polyamid, verwendet werden.

Die Erfindung wird anhand der Zeichnung weiter erläutert:

Fig. 1     ist eine Seitenansicht einer bevorzugten Ausführungsform der erfindungsgemäßen Rohrschelle in geöffnetem Zustand;

Fig. 2     ist eine Seitenansicht der Rohrschelle gemäß Fig. 1 in geschlossenem Zustand;

Fig. 3     ist eine Ansicht der den Flanschen gegenüberliegenden Mantelseite der Rohrschelle gemäß Fig. 1 und 2;

Fig. 4     ist eine Draufsicht auf den Flansch der Rohrschelle gemäß Fig. 1, der als Widerlager für den Kopf der Spannschraube dient;

Fig. 5     ist eine Draufsicht auf den zweiten Flansch der Rohrschelle gemäß Fig. 1, der nicht als Widerlager für den Kopf der Spannschraube dient;

Fig. 6     ist eine Draufsicht auf die Platte 5 der Rohrschelle gemäß Fig. 1;

Fig. 7     ist eine Seitenansicht der Platte gemäß Fig. 6;

Fig. 8     ist ein Schnitt nach Linie A-B in Fig. 3 durch die Rohrschelle gemäß Fig. 2;

Fig. 9     ist eine Seitenansicht einer zweiten Ausführungsform der Platte gemäß Fig. 6 und 7.

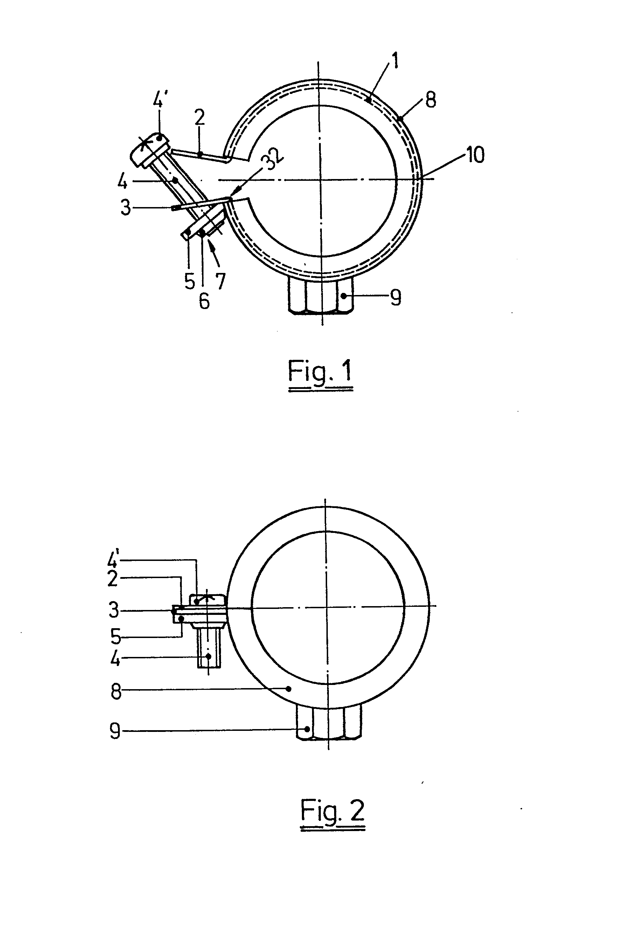

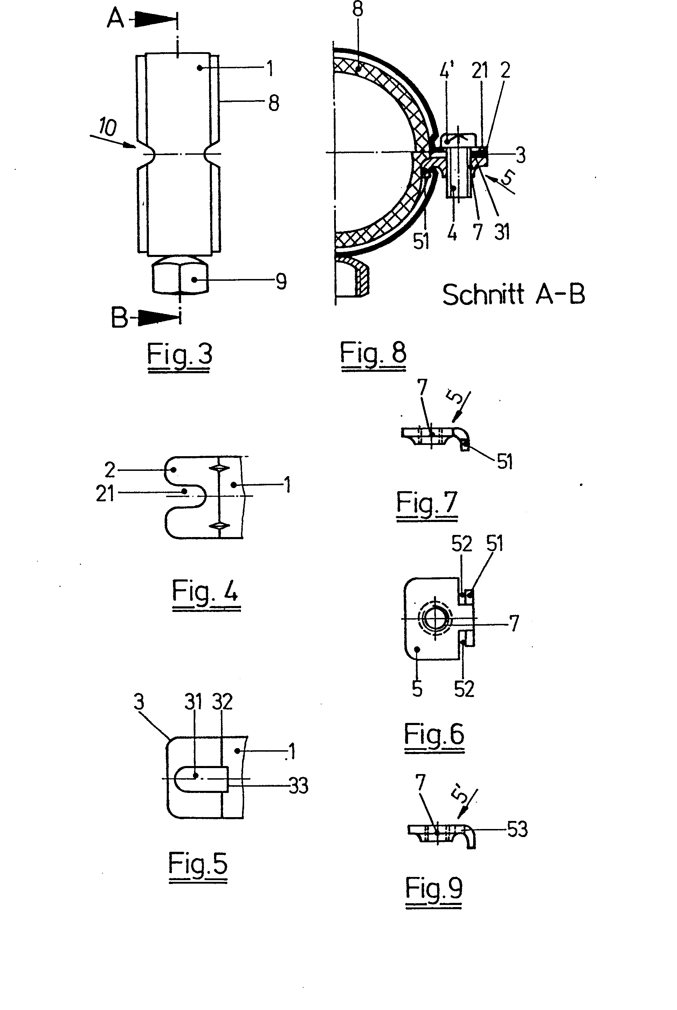

Die Rohrschelle (Fig. 1) besteht aus dem etwa kreisförmig gebogenen einteiligen Schellenband 1 aus Stahlblech mit zwei nach außen abgebogenen Endflanschen 2, 3, die mittels einer schwenkbar gelagerten Spannschraube 4 zusammengezogen werden können. Der eine, als Widerlager für den Kopf 4' der Spannschraube 4 dienende Flansch 2 ist offen geschlitzt; durch den Schlitz 21 (Fig. 4) läßt sich die Spannschraube 4 seitlich einschwenken. Der andere, nicht als Widerlager für den Schraubenkopf 4' dienende Flansch 3 ist ebenfalls geschlitzt (Fig. 5); der Längsschlitz 31 ist jedoch nicht nach außen offen, sondern geschlossen, und erstreckt sich über die Biegestelle 32 zwischen dem Schellenband 1 und dem Flansch 3 hinaus und endet in Form einer Nut 33 im Schellenband 1 (Fig. 8).

Die Spannschraube 4 durchsetzt den Flansch 3, d.h. dessen Längsschlitz 31 mit Spiel und greift in die Gewindebohrung 7 der ebenen, schwenkbar mit dem Schellenband 1 verbundenen Platte 5 ein (Fig. 1).

Die Platte 5 (Fig. 6 und Fig. 7) weist einen hakenförmigen Ansatz 51 auf, der die Nut 33 im Schellenband 1 lösbar und schwenkbar hintergreift.

Bei der Montage der Platte 5 wird der T-förmige Ansatz 51 in Längsrichtung in den Längsschlitz 31 des Flansches 3 eingeführt, dann um 90° gedreht, wobei der Flansch 3 seitlich in die Nuten 52 der Platte 5 eingreift, und schließlich nach hinten, in Richtung auf das Schellenband 1 geschoben, bis der T-förmige Ansatz 51 in die Nut 33 des Schellenbands 1 einrastet.

Bei einer einfacheren Ausführungsform weist die Platte 5' einen Querschlitz 53 auf, dessen Breite der Breite des Flansches 3 angepaßt ist, wobei der Flansch 3 den Querschlitz 53 der Platte 5' mit Spiel durchsetzt (Fig. 9).

Dabei entspricht die Breite der Platte 5' derjenigen des Schellenbands 1, während die Breite des Flanschs 3 der Länge des Querschlitzes 53 entspricht. Bei dieser einfacheren Ausführungsform 5' der Platte 5 braucht der Flansch 3 nur durch den Querschlitz 53 der Platte 5' hindurchgeschoben zu werden, bis die Platte 5' auf der (nicht dargestellten) Schulter des Schellenbands 1 aufliegt, die durch die Reduzierung der Breite des Flansches 3 auf etwa die Länge des Querschlitzes 53 gebildet wird.

Das Schellenband 1 weist etwa gegenüber den Flanschen 2, 3 eine Soll-Biegestelle 10 auf, die durch einfache Einkerbungen oder auf andere bekannte Weise gebildet sein kann (Fig. 3).

Schließlich ist das Schellenband 1 innen mit einer profilierten schalldämmenden Einlage 8 aus gummielastischem Material ausgekleidet. Das Gummiprofil umgreift auch noch die im allgemeinen scharfkantigen Ränder des Schellenbands 1.

In geschlossenem Zustand, also bei angezogener Spannschraube 4 (Fig. 2), liegt der T-förmige Ansatz 51 der Platte 5 weitgehend vollflächig an der Innenseite des Schellenbands 1 an (Fig. 8), wobei die gummielastische Einlage 8 eine radial einwirkende Kraft auf den Ansatz 51 ausübt, die die Platte 5 stets in eine zum Flansch 3 parallele Lage zu bringen sucht.

Wird nun die aus Schraube 4 und Platte 5 bestehende Einheit zum Öffnen der Rohrschelle nach außen verschwenkt (Fig. 1), so ist dies nur entgegen der Federkraft der Einlage 8 möglich. Beim Verschwenken dieser Einheit wird nämlich der Ansatz 51 der Platte 5 angehoben, wodurch das gummielastische Material, aus dem die Einlage 8 besteht, in diesem Bereich zusammengedrückt bzw. ebenfalls angehoben wird. Hierdurch verstärkt sich die Rückkstellkraft, die die Einlage 8 auf den Ansatz 51 und damit die Platte 5 ausübt, so daß die aus Schraube 4 und Platte 5 bestehende Einheit, wenn sie nicht vom Anwender der Rohrschelle in der in Fig. 1 gezeichneten Lage gehalten wird, "automatisch" in eine Lage zurückgeschwenkt wird, bei der die Platte 5 annähernd parallel zum Flansch 3 verläuft, die Schraube 4 also in den offenen Schlitz 21 des als Widerlager für den Schraubenkopf 4' dienenden Flanschs 2 mindestens teilweise eingreift, wo sie sofort angezogen und die Rohrschelle dadurch gespannt werden kann.

Schließlich ist außen auf das Schellenband 1 noch eine Mutter 9 aufgeschweißt, mittels der die Rohrschelle auf einen entsprechenden Gewindebolzen, der in der Wand oder in der Decke verankert ist, aufgeschraubt werden kann.

Herr
Albert Berner
Weckrain 7

7118 Künzelsau

Unser Zeichen: B 1818

P a t e n t a n s p r ü c h e

1.    Rohrschelle aus einem etwa kreisförmig gebogenen, einteiligen Schellenband mit zwei nach außen abgebogenen Endflanschen, die mittels einer schwenkbar gelagerten Spannschraube zusammenzuziehen sind, wobei der eine, als Widerlager für den Kopf der Spannschraube dienende Flansch offen geschlitzt ist, dadurch gekennzeichnet, daß die Spannschraube (4) den anderen, nicht als Widerlager für den Schraubenkopf (4') dienenden Flansch (3) mit Spiel durchsetzt und in die Gewindebohrung (7) einer ebenen, schwenkbar mit dem Schellenband (1) verbundenen Platte (5) eingreift.

2.    Rohrschelle nach Anspruch 1, dadurch gekennzeichnet, daß der Flansch (3) einen nach außen geschlossenen Längsschlitz (31) aufweist, der sich über die Biegestelle (32) zwischen Schellenband (1) und Flansch (3) hinaus erstreckt und in Form einer Nut (33) im Schellenband (1) endet, und daß die Platte 5 einen hakenförmigen Ansatz (51) aufweist, der den Längsschlitz (31) und/oder die Nut (33) lösbar und schwenkbar hintergreift.

Bi/Gl

3. Rohrschelle nach Anspruch 2, dadurch gekennzeichnet, daß der Ansatz (51) T-förmig ist.

4. Rohrschelle nach Anspruch 2 oder 3, dadurch gekennzeichnet, daß der Ansatz (51) um etwa 60 bis 90° gegenüber der Ebene der Platte (5) gebogen ist.

5. Rohrschelle nach Anspruch 1, dadurch gekennzeichnet, daß die Platte (5') einen Querschlitz (53) aufweist, dessen Breite der Breite des Flansches (3) angepaßt ist, und daß der Flansch (3) den Querschlitz (53) der Platte (5') mit Spiel durchsetzt.

6. Rohrschelle nach Anspruch 5, dadurch gekennzeichnet, daß die Breite der Platte (5') derjenigen des Schellenbandes (1) entspricht, während die Breite des Flanschs (3) der Länge des Querschlitzes (53) entspricht.

7. Rohrschelle nach einem der Ansprüche 1 bis 6, dadurch gekennzeichnet, daß das Schellenband (1) eine Soll-Biegestelle (10) aufweist.

8. Rohrschelle nach einem der Ansprüche 1 bis 7, dadurch gekennzeichnet, daß das Schellenband (1) innen mit einer profilierten, schalldämmenden Einlage (8) aus gummielastischem Material ausgekleidet ist.

9. Rohrschelle nach einem der Ansprüche 1 bis 8, dadurch gekennzeichnet, daß Befestigungsmittel außen auf dem Schellenband (1) angebracht sind.

10. Rohrschelle nach Anspruch 9, dadurch gekennzeichnet, daß eine Mutter (9) auf das Schellenband (1) aufgeschweißt ist.

0188649

1/2

Fig. 1

Fig. 2

A ▶

1

8

10

B ▶

9

**Fig. 3**

8

4' 21 2

3

5

7 31

4

51

Schnitt A-B

**Fig. 8**

7   5

51

**Fig. 7**

2

21

1

**Fig. 4**

52 51

7

5   52

**Fig. 6**

3   31 32

1

33

**Fig. 5**

7   5

53

**Fig. 9**

0188649

Nummer der Anmeldung

EP 85 10 0763

### Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 346 423 (TOGE-DÜBEL A. GERHARD GmbH) * Figuren 1-4; Seite 8, Zeile 3 - Seite 10, Zeile 7 * | 1 | F 16 L 3/12 |
| A | | 2,4,7, 9-10 | |
| | --- | | |
| Y | US-A-3 310 264 (A.I. APPLETON) * Figuren 1-4 * | 1 | |
| A | | 2,4 | |
| | --- | | |
| A | FR-A-2 457 403 (J. COTTINET) * Figur 3; Seite 1, Zeilen 1-12 * | 8 | |
| | ----- | | RECHERCHIERTE SACHGEBIETE (Int. Cl.4) |
| | | | F 16 L |

Der vorliegende Recherchenbericht wurde für alle Patentansprüche erstellt.

| Recherchenort DEN HAAG | Abschlußdatum der Recherche 04-09-1985 | Prüfer NARMINIO A. |
|---|---|---|